# EUROPEAN PATENT APPLICATION

(11) **EP 4 383 826 A1**
(43) Date of publication of application: **12.06.2024**
(21) Application number: 22853156.2
(22) Date of filing: 04.08.2022
(51) Int. Cl.: H04W 48/10, H04W 36/14, H04W 72/1273, H04W 72/20, H04W 76/15

(54) **DEVICE AND METHOD**

(30) Priority: 05.08.2021 JP 2021128806
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: YAMAMOTO, Tomoyuki, Kariya-city, Aichi 448-8661 (JP); TAKAHASHI, Hideaki, Kariya-city, Aichi 448-8661 (JP)
(74) Representative: TBK
(86) International application number: PCT/JP2022/030007
(87) International publication number: WO 2023/013738

(57) **Abstract**

An apparatus (200) according to an aspect of the present disclosure includes: a communication processing unit (235) configured to process communication with a first network and communication with a second network different from the first network; and an information obtaining unit (231) configured to obtain a parameter of a periodic gap for switching the apparatus to the second network in a case where the apparatus is in a radio resource control, RRC, connected state in the first network. The communication processing unit is configured to transmit an RRC message including the parameter to a base station (100) in the first network, and the parameter is based on scheduling information that is used for scheduling system information in the second network.

## Description

### CROSS-REFERENCE TO RELATED APPLICATIONS

This application is based on Japanese Patent Application No. 2021-128806, filed on August 5, 2021, the content of which is incorporated herein.

### Technical Field

The present disclosure relates to an apparatus and a method.

### Background Art

In 3rd Generation Partnership Project (3GPP) Release 17, a work item has been launched for formulating functions to monitor for incoming information (for example, sound or data) from networks of a plurality of telecommunications operators for devices each mounted with a plurality of subscriber identity module (SIM) cards.

For example, NPLs 1 to 4 each describe the introduction of a switching procedure that uses a time gap for a multi-SIM user equipment (UE) to receive, in a case where the UE is in a connected state in a mobile network, network information in another mobile network. To implement the switching procedure, the use of an existing radio wave quality measurement mechanism has been studied. In particular, NPL 4 describes that the time gap includes a periodic time gap and an aperiodic time gap and that a parameter of the time gap is provided from the multi-SIM UE to a network by using radio resource control (RRC) signaling.

### Citation List

### Non Patent Literature

NPL 1: 3GPP TSG-RAN WG2 Meeting #113-e, Online, Jan 25th - Feb 05th 2021, R2-2100474, vivo, "[post112-e][256][Multi-SIM] Network switching details (vivo)"
NPL 2: 3GPP TSG-RAN WG2 Meeting #113 electronic, Online, Jan 25 - Feb 5, 2021, R2-2101951, Nokia, "Report on LTE legacy, Mobility, DCCA, Multi-SIM and RAN slicing"
NPL 3: 3GPP TSG-RAN WG2 Meeting #113 bis electronic, Online, April 12 - April 20, 2021, R2-2104301, Nokia, "Report on LTE legacy, Mobility, DCCA, Multi-SIM and RAN slicing"
NPL 4: 3GPP TSG-RAN WG2 Meeting #114 electronic, Online, May 19-27, 2021, R2-2106471, Nokia, "Report on LTE legacy, Mobility, DCCA, Multi-SIM and RAN slicing"

### Summary of the Invention

A detailed study by the inventors has revealed the following issue. That is, the method described in NPL 4 causes a UE to transmit a parameter of a time gap for a second mobile network to a first mobile network, but the parameter of the time gap is not always suited for the first mobile network.

An object of the present disclosure is to provide an apparatus and a method that each make it possible to configure a time gap for a second mobile network that is suited for a first mobile network.

An apparatus (200) according to an aspect of the present disclosure includes: a communication processing unit (235) configured to process communication with a first network and communication with a second network different from the first network; and an information obtaining unit (231) configured to obtain a parameter of a periodic gap for switching the apparatus to the second network in a case where the apparatus is in a radio resource control, RRC, connected state in the first network. The communication processing unit is configured to transmit an RRC message including the parameter to a base station (100) in the first network, and the parameter is based on scheduling information that is used for scheduling system information in the second network.

An apparatus (100) in a first network according to an aspect of the present disclosure includes: a communication processing unit (145) configured to communicate with a user equipment (200); and an information obtaining unit (141) configured to obtain a parameter of a periodic gap for switching the user equipment to a second network different from the first network in a case where the user equipment is in a radio resource control, RRC, connected state in the first network. The communication processing unit is configured to receive an RRC message including the parameter from the user equipment, and the parameter is based on scheduling information that is used for scheduling system information in the second network.

A method performed by an apparatus (200) according to an aspect of the present disclosure includes: processing communication with a first network and communication with a second network different from the first network; obtaining a parameter of a periodic gap for switching the apparatus to the second network in a case where the apparatus is in a radio resource control, RRC, connected state in the first network; and transmitting an RRC message including the parameter to a base station (100) in the first network. The parameter is based on scheduling information that is used for scheduling system information in the second network.

A method performed by an apparatus (100) in a first network according to an aspect of the present disclosure includes: communicating with a user equipment (200); obtaining a parameter of a periodic gap for switching the user equipment to a second network different from the first network in a case where the user equipment is in a radio resource control, RRC, connected state in the first network; and receiving an RRC message including the parameter from the user equipment. The parameter is based on scheduling information that is used for scheduling system information in the second network.

According to the present disclosure, it is possible to configure a time gap for a second mobile network that is suited for a first mobile network. Note that, instead of or in addition to this advantageous effect, the present disclosure may yield another advantageous effect.

### Brief Description of Drawings

FIG. 1 is an explanatory diagram illustrating an example of a schematic configuration of a system according to embodiments of the present disclosure.
FIG. 2 is an explanatory diagram for explaining an example of a case where a user equipment according to embodiments of the present disclosure is mounted with two SIM cards.
FIG. 3 is a block diagram illustrating an example of a schematic functional configuration of a base station according to embodiments of the present disclosure.
FIG. 4 is a block diagram illustrating an example of a schematic hardware configuration of the base station according to embodiments of the present disclosure.
FIG. 5 is a block diagram illustrating an example of a schematic functional configuration of the user equipment according to embodiments of the present disclosure.
FIG. 6 is a block diagram illustrating an example of a schematic hardware configuration of the user equipment according to embodiments of the present disclosure.
FIG. 7 is a diagram for explaining an example of scheduling information about a SIB according to embodiments of the present disclosure.
FIG. 8 is a sequence diagram for explaining an example of a schematic flow of processing according to embodiments of the present disclosure.
FIG. 9 is a diagram for explaining an example of scheduling information about a SIB according to a first modification example of embodiments of the present disclosure.
FIG. 10 is a sequence diagram for explaining an example of a schematic flow of processing according to a second modification example of embodiments of the present disclosure.

### Description of Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:
1. Configuration of System
2. Configuration of Base Station
3. Configuration of User Equipment
4. Operation Examples
5. Modification Examples

### <1. Configuration of System>

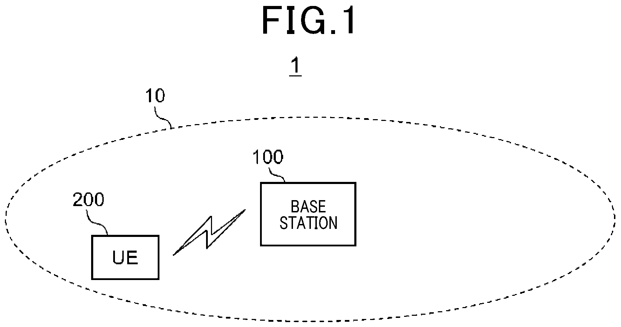

An example of a configuration of a system 1 according to embodiments of the present disclosure will be described with reference to FIG. 1. Referring to FIG. 1, the system 1 includes a base station 100 and a user equipment (UE) 200.

For example, the system 1 is a system compliant with technical specifications (TSs) in 3GPP. More specifically, for example, the system 1 is a system compliant with the TSs of 5G or new radio (NR). Naturally, the system 1 is not limited to this example.

### (1) Base Station 100

The base station 100 is a node in a radio access network (RAN) and communicates with a UE (for example, UE 200) located within a coverage area 10 of the base station 100.

For example, the base station 100 communicates with a UE (for example, UE 200) by using a RAN protocol stack. For example, the protocol stack includes protocols of RRC, service data adaptation protocol (SDAP), packet data convergence protocol (PDCP), radio link control (RLC), medium access control (MAC), and physical (PHY) layers. Alternatively, the protocol stack does not have to include all of these protocols, but may include some of these protocols.

For example, the base station 100 is a gNB. The gNB is a node that provides NR user plane and control plane protocol terminations towards a UE and is connected to a 5G core network (5GC) via an NG interface. Alternatively, the base station 100 may be an en-gNB. The en-gNB is a node that provides NR user plane and control plane protocol terminations toward a UE and operates as a secondary node in E-UTRA-NR dual connectivity (EN-DC).

The base station 100 may include a plurality of nodes. The plurality of nodes may include a first node that hosts higher layers included in the protocol stack and a second node that hosts lower layers included in the protocol stack. The higher layers may include the RRC layer, the SDAP layer, and the PDCP layer, while the lower layers may include the RLC layer, the MAC layer, and the PHY layer. The first node may be a central unit (CU) and the second node may be a distributed unit (DU). Note that the plurality of nodes may include a third node that performs lower level processing of the PHY layer and the second node may perform higher level processing of the PHY layer. The third node may be a radio unit (RU).

Alternatively, the base station 100 may be one of the plurality of nodes and may be connected to another unit of the plurality of nodes.

The base station 100 may be an integrated access and backhaul (IAB) donor or an IAB node.

### (2) UE 200

The UE 200 communicates with a base station. For example, the UE 200 communicates with the base station 100 in a case where the UE 200 is located within the coverage area 10 of the base station 100.

For example, the UE 200 communicates with a base station (for example, base station 100) by using the protocol stack.

In particular, the UE 200 is mountable with two or more SIM cards. That is, the UE 200 is a multi-SIM UE or a multi-SIM device. The UE 200 is capable of performing communication in two or more mobile networks that correspond to the two or more respective SIM cards.

For example, the UE 200 is capable of performing communication in a mobile network (hereinafter, referred to as "first mobile network") that corresponds to one of the two or more SIM cards and includes the base station 100. Further, the UE 200 is capable of performing communication in another mobile network (hereinafter, referred to as "second mobile network") that corresponds to the other one of the two or more SIM cards. The first mobile network is different from the second mobile network.

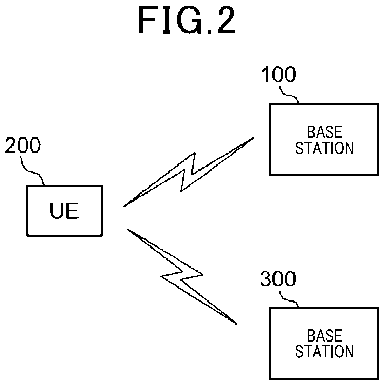

Referring to the example of FIG. 2, for example, the UE 200 is capable of performing communication in the first mobile network including the base station 100 and the second mobile network including a base station 300. For example, the UE 200 may be in an RRC connected state (RRC_CONNECTED) in the first mobile network and be in an RRC idle state (RRC_IDLE) or an RRC inactive state (RRC_INACTIVE) in the second mobile network. In such a case, while the UE 200 is connected to the base station 100 in the first mobile network, network information to be received by the UE 200 may be transmitted by the base station 300 in the second mobile network.

The network information is system information for accessing a network. More specifically, the system information includes a master information block (MIB) and a system information block (SIB). The system information is broadcast from a base station (for example, the base station 100 or the base station 300). The MIB includes scheduling information about a SIB1. The SIB includes information associated with a cell and information associated with communication in the cell. More specifically, the SIB includes the SIB1 and a plurality of other SIBs. The SIB1 includes scheduling information about the plurality of other SIBs. The UE 200 receives the plurality of other SIBs based on the scheduling information about the SIB1.

### <2. Configuration of Base Station>

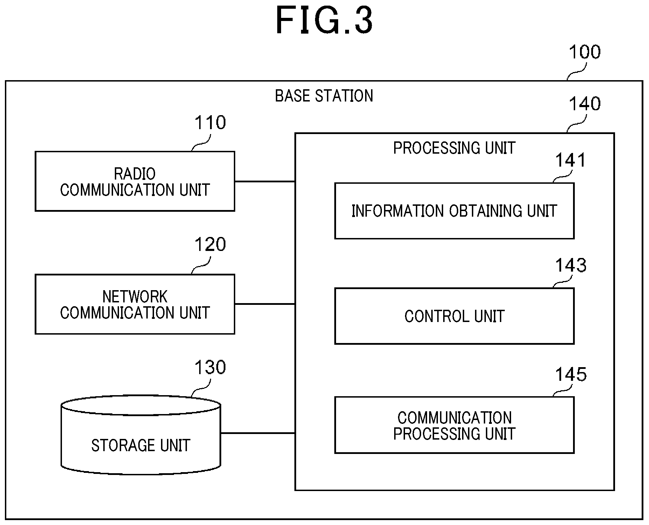

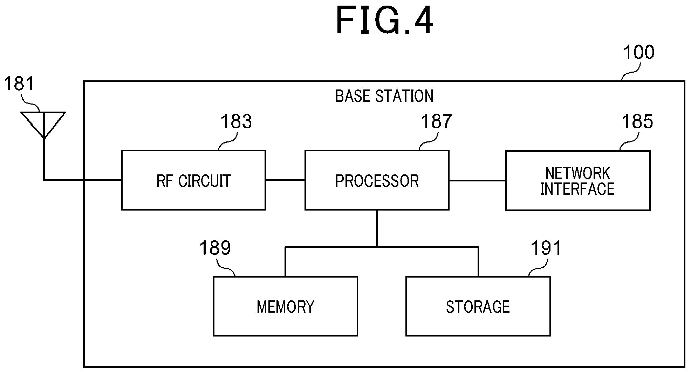

An example of a configuration of the base station 100 according to embodiments of the present disclosure will be described with reference to FIGS. 3 and 4. Note that a configuration of the base station 300 may also be the same as the configuration of the base station 100.

### (1) Functional Configuration

First, an example of a functional configuration of the base station 100 according to embodiments of the present disclosure will be described with reference to FIG. 3. Referring to FIG. 3, the base station 100 includes a radio communication unit 110, a network communication unit 120, a storage unit 130, and a processing unit 140.

The radio communication unit 110 wirelessly transmits and receives signals. For example, the radio communication unit 110 receives a signal from a UE and transmits a signal to the UE.

The network communication unit 120 receives a signal from a network and transmits a signal to the network.

The storage unit 130 stores various kinds of information for the base station 100.

The processing unit 140 provides various functions of the base station 100. The processing unit 140 includes an information obtaining unit 141, a control unit 143, and a communication processing unit 145. Note that the processing unit 140 may further include another component in addition to these components. That is, the processing unit 140 may also perform an operation other than operations of these components. Specific operations of the information obtaining unit 141, the control unit 143, and the communication processing unit 145 will be described in detail later.

For example, the processing unit 140 (communication processing unit 145) communicates with a UE (for example, UE 200) via the radio communication unit 110. For example, the processing unit 140 communicates with another node (for example, a network node in the core network or another base station) via the network communication unit 120.

### (2) Hardware Configuration

Next, an example of a hardware configuration of the base station 100 according to embodiments of the present disclosure will be described with reference to FIG. 4. Referring to FIG. 4, the base station 100 includes an antenna 181, a radio frequency (RF) circuit 183, a network interface 185, a processor 187, a memory 189, and a storage 191.

The antenna 181 converts signals into radio waves and emits the radio waves into the air. In addition, the antenna 181 receives radio waves from the air and converts the radio waves into signals. The antenna 181 may include a transmitting antenna and a receiving antenna or may be a single antenna for transmission and reception. The antenna 181 may be a directional antenna and may include a plurality of antenna elements.

The RF circuit 183 performs analog processing on signals that are transmitted and received via the antenna 181. The RF circuit 183 may include a high-frequency filter, an amplifier, a modulator, a lowpass filter, and the like.

The network interface 185 is, for example, a network adaptor, and transmits a signal to a network and receives a signal from the network.

The processor 187 performs digital processing on signals that are transmitted and received via the antenna 181 and the RF circuit 183. The digital processing includes processing of the RAN protocol stack. The processor 187 also performs processing on signals that are transmitted and received via the network interface 185. The processor 187 may include a plurality of processors or may be a single processor. The plurality of processors may include a baseband processor that performs the digital processing and one or more processors that perform other processing.

The memory 189 stores a program to be executed by the processor 187, a parameter associated with the program, and other various kinds of information. The memory 189 may include at least one of a read only memory (ROM), an erasable programmable read only memory (EPROM), an electrically erasable programmable read only memory (EEPROM), a random access memory (RAM), and a flash memory. The whole or part of the memory 189 may be included in the processor 187.

The storage 191 stores various kinds of information. The storage 191 may include at least one of a solid state drive (SSD) and a hard disc drive (HDD).

The radio communication unit 110 may be implemented by the antenna 181 and the RF circuit 183. The network communication unit 120 may be implemented by the network interface 185. The storage unit 130 may be implemented by the storage 191. The processing unit 140 may be implemented by the processor 187 and the memory 189.

Part or the whole of the processing unit 140 may be virtualized. In other words, the part or the whole of the processing unit 140 may be implemented as a virtual machine. In this case, the part or the whole of the processing unit 140 may operate as a virtual machine on a physical machine (that is, hardware) including a processor, a memory, and the like and a hypervisor.

Given the hardware configuration described above, the base station 100 may include a memory (that is, memory 189) that stores a program and one or more processors (that is, processor 187) capable of executing the program and the one or more processors may perform operations of the processing unit 140 by executing the program. The program may be a program for causing the processors to execute the operations of the processing unit 140.

### <3. Configuration of User Equipment>

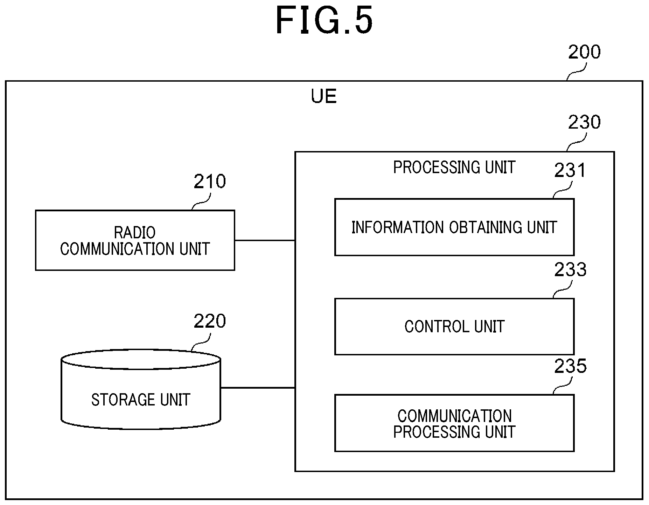

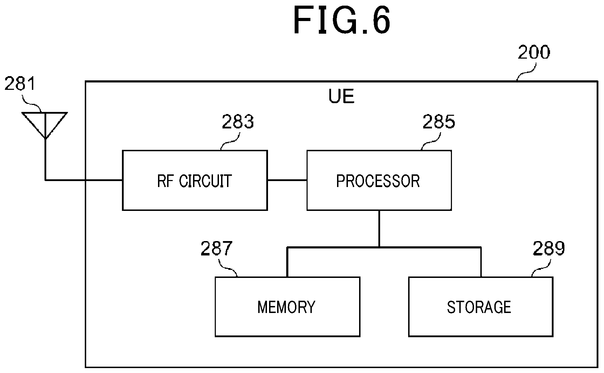

An example of a configuration of the UE 200 according to embodiments of the present disclosure will be described with reference to FIGS. 5 and 6.

### (1) Functional Configuration

First, an example of a functional configuration of the UE 200 according to embodiments of the present disclosure will be described with reference to FIG. 5. Referring to FIG. 5, the UE 200 includes a radio communication unit 210, a storage unit 220, and a processing unit 230.

The radio communication unit 210 wirelessly transmits and receives signals. For example, the radio communication unit 210 receives a signal from a base station and transmits a signal to the base station. For example, the radio communication unit 210 receives a signal from another UE and transmits a signal to the other UE.

The storage unit 220 stores various kinds of information for the UE 200.

The processing unit 230 provides various functions of the UE 200. The processing unit 230 includes an information obtaining unit 231, a control unit 233, and a communication processing unit 235. Note that the processing unit 230 may further include another component in addition to these components. That is, the processing unit 230 may also perform an operation other than operations of these components. Specific operations of the information obtaining unit 231, the control unit 233, and the communication processing unit 235 will be described in detail later.

For example, the processing unit 230 (communication processing unit 235) communicates with a base station (for example, the base station 100 or the base station 300) or another UE via the radio communication unit 210.

### (2) Hardware Configuration

Next, an example of a hardware configuration of the UE 200 according to embodiments of the present disclosure will be described with reference to FIG. 6. Referring to FIG. 6, the UE 200 includes an antenna 281, an RF circuit 283, a processor 285, a memory 287, and a storage 289.

The antenna 281 converts signals into radio waves and emits the radio waves into the air. In addition, the antenna 281 receives radio waves from the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The processor 285 performs digital processing on signals that are transmitted and received via the antenna 281 and the RF circuit 283. The digital processing includes processing of the RAN protocol stack. The processor 285 may include a plurality of processors or may be a single processor. The plurality of processors may include a baseband processor that performs the digital processing and one or more processors that perform other processing.

The memory 287 stores a program to be executed by the processor 285, a parameter associated with the program, and other various kinds of information. The memory 287 may include at least one of a ROM, an EPROM, an EEPROM, a RAM, and a flash memory. The whole or part of the memory 287 may be included in the processor 285.

The storage 289 stores various kinds of information. The storage 289 may include at least one of an SSD and an HDD.

The radio communication unit 210 may be implemented by the antenna 281 and the RF circuit 283. The storage unit 220 may be implemented by the storage 289. The processing unit 230 may be implemented by the processor 285 and the memory 287.

The processing unit 230 may be implemented by a system on a chip (SoC) including the processor 285 and the memory 287. The SoC may include the RF circuit 283 and the radio communication unit 210 may also be implemented by the SoC.

Given the hardware configuration described above, the UE 200 may include a memory (that is, memory 287) that stores a program and one or more processors (that is, processor 285) capable of executing the program and the one or more processors may perform operations of the processing unit 230 by executing the program. The program may be a program for causing the processors to execute the operations of the processing unit 230.

### <4. Operation Examples>

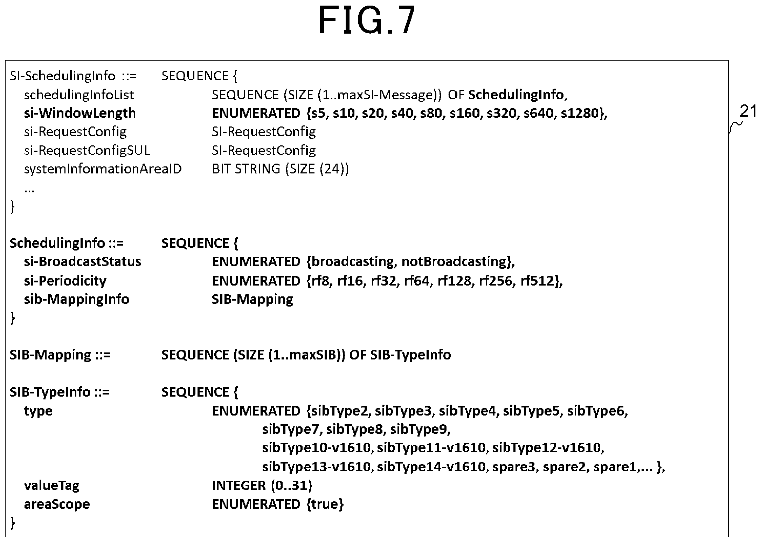

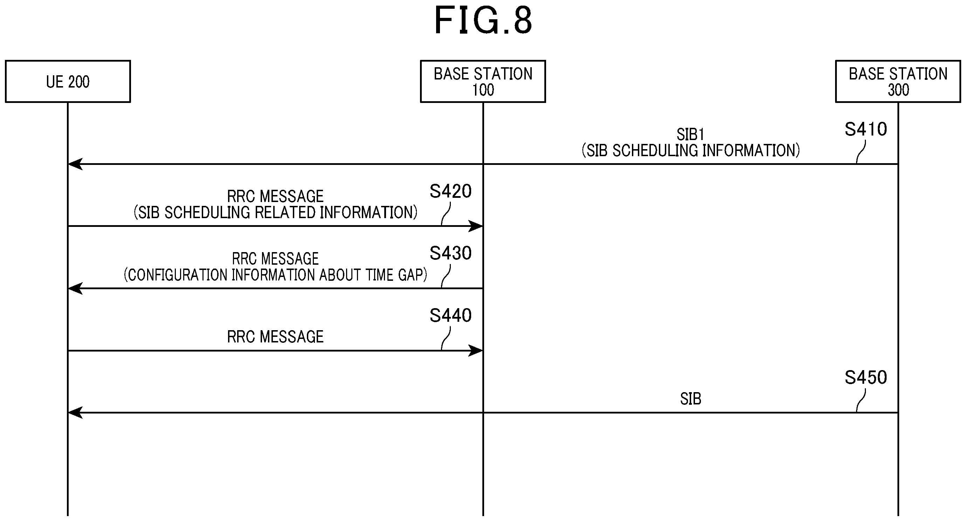

Examples of operations of the base station 100 and the UE 200 according to embodiments of the present disclosure will be described with reference to FIGS. 7 and 8.

### (1) Operation of UE 200

The UE 200 is connected to the base station 100 in the first mobile network. The UE 200 transmits scheduling related information about a SIB transmitted in the second mobile network to the base station 100 as time gap related information. After that, the UE 200 receives configuration information about a time gap for the SIB from the base station 100. The UE 200 then waits for the SIB transmitted in the second mobile network based on the configuration information about the time gap. The following describes an operation of the UE 200 and relevant information in detail.

### (1-1) Obtainment of Scheduling Related Information about SIB

The UE 200 (information obtaining unit 231) obtains scheduling related information associated with the schedule of a SIB transmitted in the second mobile network. Specifically, the UE 200 obtains the scheduling related information based on the SIB1 transmitted in the second mobile network.

For example, the UE 200 receives the SIB 1 from the base station 300 in the second mobile network. The SIB1 includes scheduling information about other SIBs. The UE 200 obtains the scheduling related information based on the scheduling information. The scheduling related information will be described in detail with reference to FIG. 7. FIG. 7 illustrates an example of the scheduling information about the SIB according to embodiments of the present disclosure. The scheduling information about the SIB is included in the SIB1.

The scheduling related information includes information indicating the transmission timing of a SIB. For example, the information indicating the transmission timing of the SIB is SchedulingInfo included in the SIB1. Referring to information 21 in FIG. 7, SchedulingInfo includes si-BroadcastStatus, si-Periodicity, and sib-MappingInfo.

si-BroadcastStatus indicates Broadcasting or notBroadcasting. Broadcasting indicates that a SIB is broadcast by using a periodicity pattern predefined and notBroadcasting indicates that a SIB is transmitted in accordance with a request of a UE by using an on-demand procedure.

si-Periocicity indicates a transmission interval between SIBs. For example, si-Periocicity indicates any of the transmission intervals predefined as illustrated in FIG. 7.

sib-MappinInfo includes type, valueTag, and areaScope. type indicates the type of a SIB. valueTag indicates whether or not the contents of a SIB are modified with some exceptions. For example, the UE 200 receives only a SIB whose contents are modified with reference to valueTag. areaScope indicates whether or not System Information Area is applied. For example, in a case where System Information Area is not applied, it is determined that a SIB is received when the UE 200 moves to a neighbor cell. In a case where System Information Area is applied, it is determined that a SIB is received when the UE 200 moves to the outside of System Information Area. In this way, sib-MappinInfo is associated with the transmission timing of the SIB in that, in a case where a certain SIB is a reception target, the reception timing (that is, transmission timing) of the certain SIB is added to the schedule for the whole of the reception target SIBs.

In addition, the scheduling related information includes information indicating the length of a period for transmitting a SIB. For example, the information indicating the length of the period is si-WindowLength included in the SIB 1. si-WindowLength indicates any of the lengths of periods predefined as illustrated in FIG. 7. For example, the transmission of a SIB is scheduled as indicated as SchedulingInfo in the period indicated as si-WindowLength.

In this way, the transmission timing of a SIB and the length of a period for the transmission are provided to the base station 100, thereby allowing the base station 100 that is the first mobile network side to decide a time gap. In addition, the scheduling information about the SIBs included in the SIB1 is provided to the base station 100, thereby allowing the base station 100 that is the first mobile network to decide a more accurate time gap.

Note that the information indicating the transmission timing of a SIB is not SchedulingInfo itself, but may be information generated based on SchedulingInfo. In addition, the information indicating the length of a period for transmitting a SIB is not si-WindowLength itself, but may be information generated based on si-WindowLength. In addition, the scheduling related information may be obtained for all the SIBs or the scheduling related information may be obtained for some of the SIBs.

### (1-2) Transmission of RRC Message Including Scheduling Related Information

The UE 200 (communication processing unit 235) transmits an RRC message including the obtained scheduling related information to the base station 100. The RRC message includes scheduling related information as time gap related information associated with a time gap for a SIB.

The RRC message is an existing RRC message. For example, the RRC message may be a UEAssistanceInformation message. This makes it possible to transmit the time gap related information (that is, scheduling related information) to the base station 100 without additionally defining a new RRC message. Note that the RRC message may be an RRC message which requests a response. For example, the RRC message that requests a response may be an RRCResumeRequest message.

In addition, the RRC message may be an RRC message defined for a periodic or aperiodic time gap. The defined RRC message indicates that the base station 100 is requested to configure a periodic or aperiodic time gap. This makes it possible to communicate the configuration information about the time gap without modifying an existing RRC message. Further, the RRC message may be an RRC message defined for a time gap for a SIB.

In addition, the RRC message includes request information for requesting a time gap to be configured. For example, the RRC message includes request information for requesting the base station 100 to configure a time gap based on the time gap related information in addition to the scheduling related information. This makes it possible to cause the base station 100 to configure a time gap based on the scheduling related information included in the RRC message.

### (1-3) Reception of RRC Message Including Configuration Information about Time Gap

After the transmission of an RRC message including the scheduling related information, the UE 200 (communication processing unit 235) receives another RRC message including configuration information about a time gap from the base station 100. The UE 200 (information obtaining unit 231) obtains the configuration information included in the other RRC message. This makes it possible to wait for the reception of a SIB in the time gap configured based on the scheduling related information.

For example, the other RRC message may be an RRCReconfiguration message or an RRCResume message. This makes it possible to receive the configuration information about the time gap from the base station 100 without additionally defining a new RRC message.

### (1-4) Reception of SIB in Time Gap

The UE 200 (communication processing unit 235) receives the SIB transmitted in the second mobile network based on the configuration information about the time gap.

Specifically, the UE 200 switches from the first mobile network to the second mobile network in the time gap indicated by the configuration information received from the base station 100. The UE 200 then waits for the reception of a SIB from the base station 300 in the second mobile network within the time gap. In other words, the UE 200 monitors for the SIB. When the SIB is transmitted within the time gap, the UE 200 receives the SIB. The UE 200 switches from the second mobile network to the first mobile network once going out of the time gap.

This allows the UE 200 to switch to the second mobile network in accordance with the transmission schedule of a SIB in the second mobile network. The UE 200 is thus capable of receiving a SIB in the second mobile network while communicating with the base station 100 in the first mobile network.

Note that no communication is performed between the base station 100 in the first mobile network and the UE 200 within the time gap.

### (2) Operation of Base Station 100

The base station 100 is connected to the UE 200 in the first mobile network. The base station 100 receives scheduling related information about a SIB transmitted in the second mobile network from the UE 200 as time gap related information. The base station 100 configures a time gap for a SIB based on the scheduling related information and transmits the configuration information about the time gap to the UE 200. The following describes an operation of the base station 100 and relevant information in detail. Note that the contents which are substantially the same as the description of an operation of the UE 200 will not be described in detail.

### (2-1) Reception of RRC Message Including Scheduling Related Information

The base station 100 (communication processing unit 145) receives an RRC message including scheduling related information as time gap related information from the UE 200. The base station 100 (information obtaining unit 141) obtains the scheduling related information included in the RRC message.

For example, the RRC message may be a UEAssistanceInformation message or an RRCResumeRequest message. In addition, the RRC message may be an RRC message defined for a periodic or aperiodic time gap.

Note that the base station 100 may request the UE 200 to transmit the RRC message. For example, the base station 100 may transmit, to the UE 200, an existing RRC message including request information indicating that the transmission of the scheduling related information is requested.

### (2-2) Configuration of Time Gap for SIB

The base station 100 (control unit 143) configures a time gap based on scheduling related information serving as time gap related information.

Specifically, the base station 100 derives the timing and the period length for transmitting a SIB in the second mobile network based on the scheduling related information. The base station 100 then configures a time gap that covers the timing and the period length. That is, the base station 100 generates configuration information about the time gap.

Here, the base station 100 also configures a time gap based on information other than the scheduling related information. For example, the base station 100 configures a time gap based on the scheduling related information by taking into consideration the status of communication with another UE, another base station, a core network, or the like, or processing or the like in the base station 100. This makes it possible to configure a time gap that is suited for the base station 100 that is the first mobile network.

Note that, in a case where an RRC message including the scheduling related information includes request information for requesting a time gap to be configured, the base station 100 may configure a time gap based on the scheduling related information.

### (2-3) Transmission of RRC Message Including Configuration Information about Time Gap

The base station 100 (communication processing unit 145) transmits another RRC message including configuration information about a time gap to the UE 200.

For example, the other RRC message including the configuration information may be an RRCReconfiguration message or an RRCResume message.

### (3) Flow of Processing

An example of processing according to embodiments of the present disclosure will be described with reference to FIG. 8. In FIG. 8, the UE 200 communicates with the base station 100 in the first mobile network and communicates with the base station 300 in the second mobile network.

The UE 200 receives the SIB1 from the base station 300 (S410). For example, the UE 200 receives the SIB1 from the base station 300 and obtains scheduling information about each SIB included in the SIB1.

The UE 200 transmits an RRC message including the scheduling related information about the SIB as time gap related information to the base station 100 (S420). For example, the UE 200 generates scheduling related information based on the obtained scheduling information and transmits an RRC message including the generated scheduling related information to the base station 100. For example, the RRC message is a UEAssistanceInformation message or an RRCResumeRequest message.

The base station 100 transmits an RRC message including the configuration information about the time gap for the SIB to the UE 200 (S430). For example, the base station 100 generates configuration information about a time gap based on the scheduling related information included in the received RRC message and the communication schedule, the processing schedule, or the like in the base station 100. The base station 100 then transmits an RRC message including the generated configuration information about the time gap to the UE 200. For example, the RRC message is an RRCReconfiguration message or an RRCResume message.

The UE 200 transmits an RRC message serving as a response to the RRC message including the configuration information about the time gap to the base station 100 (S440). For example, the UE 200 obtains the configuration information about the time gap included in the received RRC message and waits for the reception of a SIB in the second mobile network based on the configuration information about the time gap. For example, the response RRC message is an RRCReconfigurationComplete message or an RRCResumeComplete message.

The UE 200 receives a SIB in the second mobile network based on the obtained configuration information about the time gap (S450). For example, the UE 200 switches to the second mobile network in the time gap indicated by the obtained configuration information and receives a SIB transmitted in the time gap.

In this way, the base station 100 in the first mobile network and the UE 200 communicate an RRC message including time gap related information associated with a time gap for a SIB transmitted in the second mobile network and the time gap related information includes scheduling related information associated with the schedule of the SIB. The scheduling related information used to decide a time gap is therefore shared with the base station 100, allowing the base station 100 that is the first mobile network side to decide a time gap. It is thus possible to configure a time gap for the second mobile network that is suited for the first mobile network. Eventually, it is possible to contribute to the maintenance of the performance of the whole first mobile network or an increase in the performance.

### <5. Modification Examples>

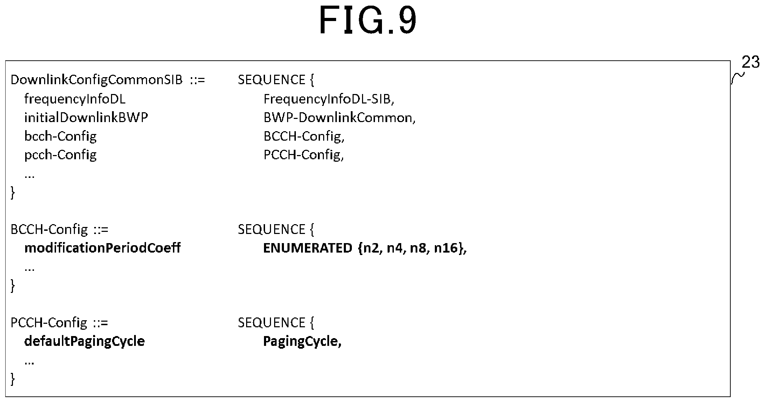

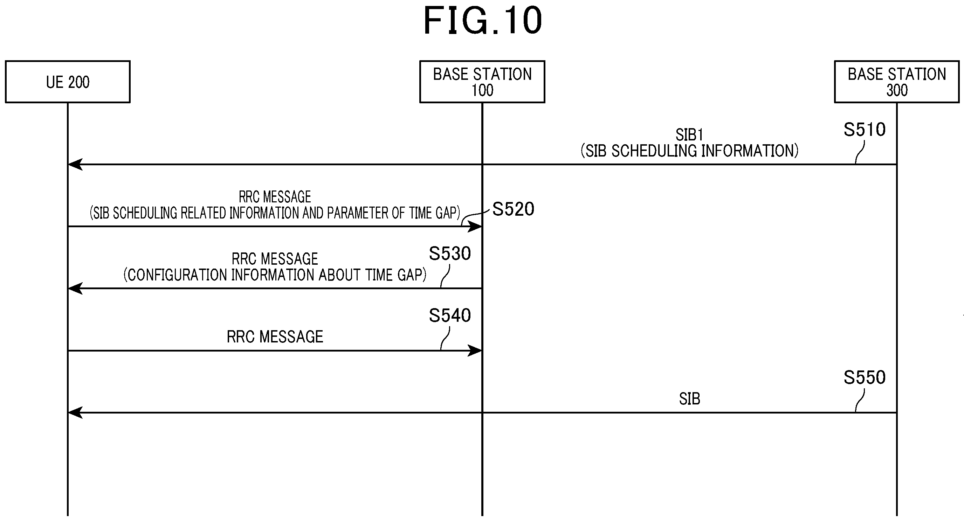

First to third modification examples according to embodiments of the present disclosure will be described with reference to FIGS. 9 and 10. Note that two or more of these modification examples may be combined.

### (1) First Modification Example: Another Example of Scheduling Related Information

In the embodiments of the present disclosure described above, the scheduling related information is information indicating the transmission timing of a SIB or the length of a period for transmitting a SIB. However, the scheduling related information according to embodiments of the present disclosure is not limited to this example.

As the first modification example of embodiments of the present disclosure, the scheduling related information may include information for identifying the modification timing of a SIB.

The information for identifying the modification timing of the SIB is included in the SIB 1. The information for identifying the modification timing of the SIB will be described in detail with reference to FIG. 9. Information 23 illustrated in FIG. 9 is included in the SIB1.

The information for identifying the modification timing of the SIB is modificationPeriodCoeff and defaultPagingCycle as indicated in the information 23 of FIG. 9. For example, the modification timing of the SIB (also referred to as SIB modification periodicity or si-modificationPeriod) is identified as modificationPeriodCoeff*defaultPagingCycle. si-modificationPeriod is broadcast control channel (BCCH) modification periodicity and thus also SIB modification periodicity that is transmitted by using the BCCH.

In this way, the scheduling related information includes information for identifying the modification timing of a SIB. The information for identifying the modification timing of the SIB is modificationPeriodCoeff and defaultPagingCycle included in the SIB1. Therefore, the transmission of a SIB is treated as a periodic event, thereby making it possible to configure a periodic time gap for the SIB. In the case of treatment as a temporal event, a new time gap is configured and the configuration information is shared whenever a SIB is modified. This makes it possible to reduce processing or communication for configuring a time gap as compared with the case of the treatment as a temporal event.

### (2) Second Modification Example: Provision of Parameter of Time Gap

In the embodiments of the present disclosure described above, the time gap related information is scheduling related information. However, the time gap related information according to embodiments of the present disclosure is not limited to this example.

As the second modification example of embodiments of the present disclosure, the time gap related information may further include a parameter of a time gap.

Specifically, the UE 200 (control unit 233) decides a parameter of a time gap based on the schedule of a SIB. The UE 200 (communication processing unit 235) transmits an RRC message including the decided parameter of the time gap and the scheduling related information as time gap related information to the base station 100. The base station 100 (control unit 143) generates configuration information about the time gap based on the scheduling related information and the parameter of the time gap.

An example of processing according to the second modification example of embodiments of the present disclosure will be described with reference to FIG. 10. In FIG. 10, the UE 200 communicates with the base station 100 in the first mobile network and communicates with the base station 300 in the second mobile network. Note that processing which is substantially the same as that of FIG. 8 will not be described.

The UE 200 receives the SIB1 from the base station 300 (S510).

The UE 200 transmits an RRC message including the scheduling related information about the SIB and the parameter of the time gap as time gap related information to the base station 100 (S520). For example, the UE 200 decides the parameter of the time gap based on scheduling information obtained from the SIB1. In addition, the UE 200 generates scheduling related information based on the scheduling information. The UE 200 then transmits an RRC message including the scheduling related information and the parameter of the time gap to the base station 100.

The base station 100 transmits an RRC message including the configuration information about the time gap for the SIB to the UE 200 (S530). For example, the base station 100 determines whether or not the parameter of the time gap included in the received RRC message is suited for the first mobile network. Specifically, the base station 100 determines whether or not the parameter of the time gap is suited for the communication schedule, the processing schedule, or the like in the base station 100. In a case where the base station 100 determines that the parameter of the time gap is suited, the base station 100 generates configuration information about the time gap based on the parameter of the time gap. In a case where the base station 100 determines that the parameter of the time gap is not suited, the base station 100 generates configuration information about a time gap based on the scheduling related information included in the received RRC message and the communication schedule, the processing schedule, or the like. The base station 100 then transmits an RRC message including the generated configuration information about the time gap to the UE 200.

The UE 200 transmits an RRC message serving as a response to the RRC message including the configuration information about the time gap to the base station 100 (S540). The UE 200 then receives a SIB in the second mobile network based on the obtained configuration information about the time gap (S550).

In this way, the time gap related information further includes a parameter of a time gap and the UE 200 decides the parameter of the time gap based on the schedule of a SIB. The base station 100 generates configuration information about the time gap based on the parameter of the time gap and the scheduling related information. This makes it possible to decide a time gap by taking into consideration not only the status of the base station 100 that is the first mobile network side, but also the status of the UE 200. It is thus possible to optimize the whole of the system including the UE 200.

Note that the parameter of the time gap may be included and transmitted in an RRC message other than the scheduling related information.

### (3) Third Modification Example: Compliance with Other TSs

In the example described in embodiments of the present disclosure, the system 1 is a system compliant with the TSs of 5G or NR. However, the system 1 according to embodiments of the present disclosure is not limited to this example.

In the third modification example of embodiments of the present disclosure, the system 1 may be a system compliant with other TSs in 3GPP. As an example, the system 1 may be a system compliant with the TSs of long term evolution (LTE), LTE advanced (LTE-A), or 4G and the base station 100 may be an evolved node B (eNB). Alternatively, the base station 100 may be an ng-eNB. As another example, the system 1 may be a system compliant with the TSs of 3G and the base station 100 may be a Node B. As yet another example, the system 1 may be a system compliant with next generation (for example, 6G) TSs.

Alternatively, the system 1 may be a system compliant with TSs of another standards organization for mobile communications.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in a process described in the present specification do not necessarily have to be executed chronologically in the order described in the flowchart or the sequence diagram. For example, steps in a process may be executed in an order different from the order described as the flowchart or the sequence diagram or may be executed in parallel. In addition, some of steps in a process may be removed or a further step may be added to the process.

For example, there may be provided a method including the operations of one or more components of the apparatus described in the present specification or there may be provided a program for causing a computer to execute the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (LTE) may be referred to by another name such as mobile station, mobile terminal, mobile apparatus, mobile unit, subscriber station, subscriber terminal, subscriber apparatus, subscriber unit, wireless station, wireless terminal, wireless apparatus, wireless unit, remote station, remote terminal, remote apparatus, or remote unit.

For example, in the present disclosure, "transmit" may mean performing processing of at least one layer in a protocol stack used for transmission or physically transmitting a signal wirelessly or by wire. Alternatively, "transmit" may mean a combination of performing the processing of the at least one layer and physically transmitting a signal wirelessly or by wire. Similarly, "receive" may mean performing processing of at least one layer in a protocol stack used for reception or physically receiving a signal wirelessly or by wire. Alternatively, "receive" may mean a combination of performing the processing of the at least one layer and physically receiving a signal wirelessly or by wire. The at least one layer may be replaced with at least one protocol.

For example, in the present disclosure, "obtain/acquire" may mean obtaining/acquiring information from stored information, obtaining/acquiring information from information received from another node, or obtaining/acquiring information by generating the information.

For example, in the present disclosure, "include" and "comprise" do not mean that listed items alone are included, but mean that listed items alone may be included or a further item may be included in addition to the listed items.

For example, in the present disclosure, "or" does not mean exclusive OR, but means inclusive OR.

Note that the technical features included in the embodiments may be represented as the following features. Naturally, the present disclosure is not limited to the following features.

### (Feature 1)

A user equipment (200) comprising:
a communication processing unit (235) configured to communicate with a base station (100) in a first mobile network; and
an information obtaining unit (231) configured to obtain time gap related information associated with a time gap for a system information block, SIB, that is transmitted in a second mobile network, wherein
the communication processing unit is configured to transmit a radio resource control, RRC, message including the time gap related information to the base station, and
the time gap related information includes scheduling related information associated with schedule of the SIB.

### (Feature 2)

The user equipment according to Feature 1, wherein the scheduling related information includes information indicating a transmission timing of the SIB.

### (Feature 3)

The user equipment according to Feature 2, wherein the information indicating the transmission timing of the SIB is SchedulingInfo included in a SIB1.

### (Feature 4)

The user equipment according to any one of Features 1 to 3, wherein the scheduling related information includes information indicating length of a period for transmitting the SIB.

### (Feature 5)

The user equipment according to Feature 4, wherein the information indicating the length of the period for transmitting the SIB is si-WindowLength included in a SIB1.

### (Feature 6)

The user equipment according to any one of Features 1 to 5, wherein the scheduling related information includes information for identifying a modification timing of the SIB.

### (Feature 7)

The user equipment according to Feature 6, wherein the information for identifying the modification timing of the SIB is modificationPeriodCoeff and defaultPagingCycle included in a SIB1.

### (Feature 8)

The user equipment according to any one of Features 1 to 7, wherein the RRC message includes request information for requesting the time gap to be configured.

### (Feature 9)

The user equipment according to any one of Features 1 to 8, wherein the RRC message is an RRC message defined for a periodic or aperiodic time gap.

### (Feature 10)

The user equipment according to any one of Features 1 to 8, wherein the RRC message is a UEAssistanceInformation message or an RRCResumeRequest message.

### (Feature 11)

The user equipment according to any one of Features 1 to 10, wherein
the time gap related information further includes a parameter of the time gap, and
the user equipment further comprises a control unit (233) configured to decide the parameter of the time gap based on the schedule of the SIB.

### (Feature 12)

The user equipment according to any one of Features 1 to 11, wherein the communication processing unit is configured to receive, after transmission of the RRC message, another RRC message including configuration information about the time gap.

### (Feature 13)

The user equipment according to Feature 12, wherein the other RRC message is an RRCReconfiguration message or an RRCResume message.

### (Feature 14)

The user equipment according to Feature 12 or 13, wherein the communication processing unit is configured to receive the SIB that is transmitted in the second mobile network based on the configuration information about the time gap.

### (Feature 15)

A base station (100) in a first mobile network, comprising:
a communication processing unit (145) configured to communicate with a user equipment (200); and
an information obtaining unit (141) configured to obtain time gap related information associated with a time gap for a system information block, SIB, that is transmitted in a second mobile network, wherein
the communication processing unit is configured to receive a radio resource control, RRC, message including the time gap related information from the user equipment, and
the time gap related information includes scheduling related information associated with schedule of the SIB.

### (Feature 16)

The base station according to Feature 15, further comprising a control unit (143) configured to generate configuration information about the time gap based on the time gap related information, wherein
the communication processing unit is configured to transmit another RRC message including the configuration information about the time gap.

### (Feature 17)

The base station according to Feature 16, wherein
the time gap related information further includes a parameter of the time gap, and
the control unit is configured to generate the configuration information about the time gap based on the scheduling related information and the parameter of the time gap.

### (Feature 18)

A method performed by a user equipment (200), comprising:
communicating with a base station (100) in a first mobile network;
obtaining time gap related information associated with a time gap for a system information block, SIB, that is transmitted in a second mobile network; and
transmitting a radio resource control, RRC, message including the time gap related information to the base station, wherein
the time gap related information includes scheduling related information associated with schedule of the SIB.

### (Feature 19)

A method performed by a base station (100) in a first mobile network, comprising:
communicating with a user equipment (200);
obtaining time gap related information associated with a time gap for a system information block, SIB, that is transmitted in a second mobile network; and
receiving a radio resource control, RRC, message including the time gap related information from the user equipment, wherein
the time gap related information includes scheduling related information associated with schedule of the SIB.

### (Feature 20)

A program for causing a computer to execute operations of:
communicating with a base station (100) in a first mobile network;
obtaining time gap related information associated with a time gap for a system information block, SIB, that is transmitted in a second mobile network; and
transmitting a radio resource control, RRC, message including the time gap related information to the base station, wherein
the time gap related information includes scheduling related information associated with schedule of the SIB.

### (Feature 21)

A program for causing a computer to execute operations of:
communicating with a user equipment (200) in a first mobile network;
obtaining time gap related information associated with a time gap for a system information block, SIB, that is transmitted in a second mobile network; and
receiving a radio resource control, RRC, message including the time gap related information from the user equipment, wherein
the time gap related information includes scheduling related information associated with schedule of the SIB.

### (Feature 22)

A non-transitory tangible computer-readable storage medium having stored therein a program for causing a computer to execute operations of:
communicating with a base station (100) in a first mobile network;
obtaining time gap related information associated with a time gap for a system information block, SIB, that is transmitted in a second mobile network; and
transmitting a radio resource control, RRC, message including the time gap related information to the base station, wherein
the time gap related information includes scheduling related information associated with schedule of the SIB.

### (Feature 23)

A non-transitory tangible computer-readable storage medium having stored therein a program for causing a computer to execute operations of:
communicating with a user equipment (200) in a first mobile network;
obtaining time gap related information associated with a time gap for a system information block, SIB, that is transmitted in a second mobile network; and
receiving a radio resource control, RRC, message including the time gap related information from the user equipment, wherein
the time gap related information includes scheduling related information associated with schedule of the SIB.

## Claims

1. An apparatus (200) comprising:
a communication processing unit (235) configured to process communication with a first network and communication with a second network different from the first network; and
an information obtaining unit (231) configured to obtain a parameter of a periodic gap for switching the apparatus to the second network in a case where the apparatus is in a radio resource control, RRC, connected state in the first network, wherein
the communication processing unit is configured to transmit an RRC message including the parameter to a base station (100) in the first network, and
the parameter is based on scheduling information that is used for scheduling system information in the second network.

2. The apparatus according to claim 1, wherein the scheduling information includes information indicating a transmission timing of a system information block, SIB.

3. The apparatus according to claim 2, wherein the information indicating the transmission timing of the SIB is SchedulingInfo included in a SIB1.

4. The apparatus according to any one of claims 1 to 3, wherein the scheduling information includes information indicating length of a period for transmitting a SIB.

5. The apparatus according to claim 4, wherein the information indicating the length of the period for transmitting the SIB is si-WindowLength included in a SIB1.

6. The apparatus according to any one of claims 1 to 5, wherein the scheduling information includes information for identifying a modification timing of a SIB.

7. The apparatus according to claim 6, wherein the information for identifying the modification timing of the SIB is modificationPeriodCoeff and defaultPagingCycle included in a SIB 1.

8. The apparatus according to any one of claims 1 to 7, wherein the RRC message includes request information for requesting the gap to be configured.

9. The apparatus according to any one of claims 1 to 8, wherein the gap is configured based on the parameter.

10. The apparatus according to claim 9, wherein the communication processing unit is configured to switch the apparatus to the second network in the gap and receive the system information.

11. The apparatus according to any one of claims 1 to 10, wherein the communication processing unit is configured to receive the scheduling information from the base station in the second network.

12. An apparatus (100) in a first network, comprising:
a communication processing unit (145) configured to communicate with a user equipment (200); and
an information obtaining unit (141) configured to obtain a parameter of a periodic gap for switching the user equipment to a second network different from the first network in a case where the user equipment is in a radio resource control, RRC, connected state in the first network, wherein
the communication processing unit is configured to receive an RRC message including the parameter from the user equipment, and
the parameter is based on scheduling information that is used for scheduling system information in the second network.

13. A method performed by an apparatus (200), comprising:
processing communication with a first network and communication with a second network different from the first network;
obtaining a parameter of a periodic gap for switching the apparatus to the second network in a case where the apparatus is in a radio resource control, RRC, connected state in the first network; and
transmitting an RRC message including the parameter to a base station (100) in the first network, wherein
the parameter is based on scheduling information that is used for scheduling system information in the second network.

14. A method performed by an apparatus (100) in a first network, comprising:
communicating with a user equipment (200);
obtaining a parameter of a periodic gap for switching the user equipment to a second network different from the first network in a case where the user equipment is in a radio resource control, RRC, connected state in the first network; and
receiving an RRC message including the parameter from the user equipment, wherein
the parameter is based on scheduling information that is used for scheduling system information in the second network.
